# EUROPEAN PATENT APPLICATION

(11) **EP 3 664 457 A1**
(43) Date of publication of application: **10.06.2020**
(21) Application number: 18210324.2
(22) Date of filing: 05.12.2018
(51) Int. Cl.: H04N 21/2362, H04N 21/643, H04N 21/8355

(54) **SYSTEM AND METHOD FOR IMPROVED PARENTAL CONTROL RATINGS DELIVERY TO A CONTENT RECEIVER**

(71) Applicant: Advanced Digital Broadcast S.A., 1293 Bellevue (CH)
(72) Inventor: Polak, Michal, 65-119 Zielona Gora (PL)
(74) Representative: Blonski, Pawel

(57) **Abstract**

An object of the present invention is a method for improved parental control ratings delivery to a content receiver, said content received being configured to retrieve data according to Program-specific information (PSI) and Service Information (SI) according to Digital Video Broadcasting (DVB), the method comprising the steps of: retrieving Program-specific information for given content; determining whether Parental Rating data is present in said Program-specific information (PSI); applying the parental rating, retrieved from the Program-specific information (PSI), to the outputting of said content; retrieving Service Information (SI) for the given content; determining a presence of Parental Rating data in the retrieved Service Information; applying the parental rating, retrieved from the (SI) data, to the outputting of said content.

## Description

### TECHNICAL FIELD

The present invention relates to a system and method for improved parental control ratings delivery to a content receiver. In particular, the present invention relates to improvements in delivery as well as application of parental restrictions in an audio/video content receiver.

### BACKGROUND OF THE INVENTION

A Set-Top-Box (STB), which is a television content receiver, enables presentation, to users, television services (channels) comprising a plurality of data components such as video, audio, subtitles and other.

There may be more than one component of the same type (video, audio, subtitles, etc.) associated with a service, for example two or more audio components that refer to elementary streams of audio tracks, for example corresponding to different languages.

Linking a given service to its components is established by means of a Program Map Table (PMT) as specified by Program-specific information (PSI) and defined by ISO/IEC 13818-1 (MPEG-2 Part 1: Systems).

When an STB is to present a given service, the PSI/SI engine requests the tuner to tune to a desired Transport Stream (TS) comprising the service's metadata (as the PMT) and data (as individual components). The list of available services is known as a result of scanning over broadcast frequencies, retrieving and processing PSI or Service Information (SI; specified by ETSI EN 300 468) tables as Network Information Table (NIT) or SDT (Service Description Table) or any other proprietary method.

Firstly, the Program Allocation Table (PAT) is collected and processed in order to find a Packet Identifier (PID) of the service's PMT (the PAT's PID is always 0). When the service's PMT has been collected and processed, the STB starts presenting the service's components.

Depending on the service type (television, radio, application, etc.) there may be a number of various components associated with the service. For example, a television service contains at least one video and at least one audio components and optionally other components as subtitles (one or more), teletext and application data. A radio service is composed usually only of a single audio component. An application service can be linked with application data to be presented to the user, for example in a graphical manner by the STB's Graphical User Interface (GUI).

In case of a service comprising more than one component of a given type, the exact component instance is selected, for example according to the user's settings as the preferred language(s) for audio and subtitles components. In case of audio components also other settings like auto-enabling components for blind and visually impaired users (known also as audio description) can be taken into account. A similar approach may be applied for subtitles - standard or so called HoH (Hard of Hearing) subtitles. All such components may be selected automatically or manually by a user. Clearly, these components must be broadcast and correctly associated within the PMT so that they could be identified and their data received, processed (e.g. decrypted, decompressed, decoded) and presented.

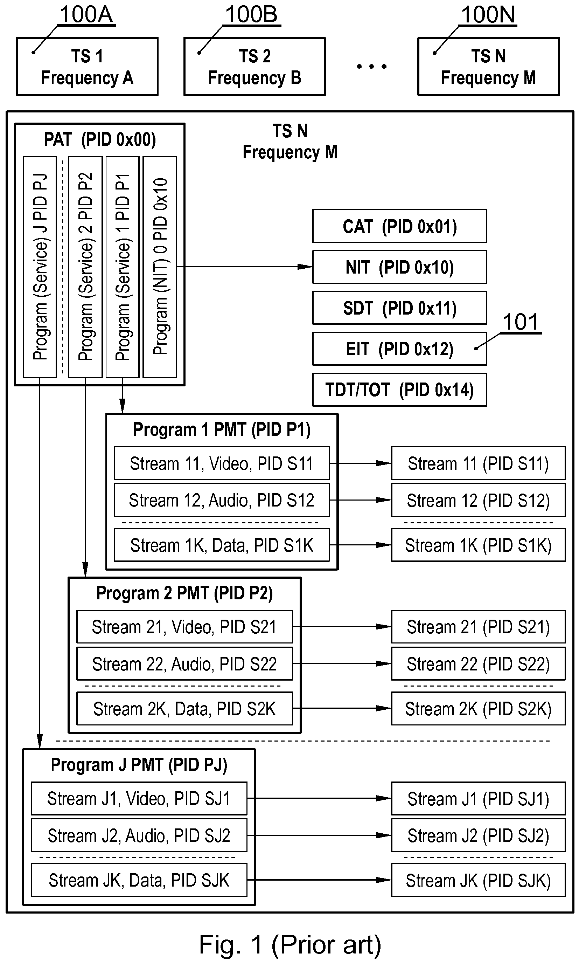

A relation between the PAT, PMTs and services' components in a context of a TS 100A-100N has been depicted in Fig. 1. There are also other tables that may comprise information related to a given service. An example includes the Event Information Table (EIT) 101 with information on events (programmes) for associated services.

Each event has a set of metadata as the start and duration of the event, its title and description, genre (e.g. movie) and sub-genre (e.g. comedy) and other, in particularly parental rating information.

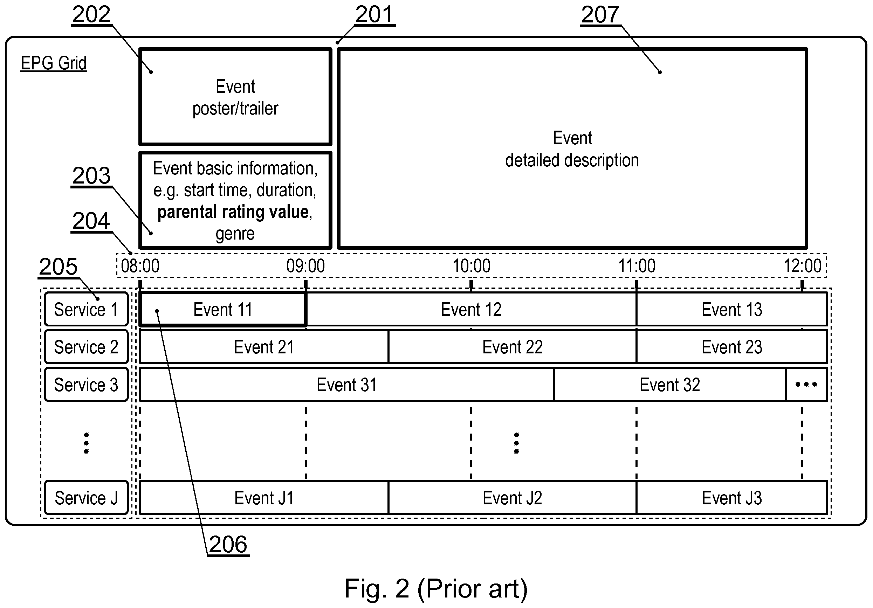

If an STB's parental control settings restrict access to a given event (of a service), its presentation does not start or its interrupted at the time the associated EIT event commences. EIT events are presented to the user by means of a GUI, for example as the Electronic Program Guide (EPG) or Interactive Program Guide (IPG) in a grid-like fashion as depicted in Fig. 2; when a given event is focused on the screen, its metadata is displayed, including such information as the event's parental rating.

Typically, such EPGs 201 present event details 202 (graphical or video reference), 203 (basic information), 207 (description) and a time axis 204 on which events 206 of selected services 205 are presented.

An STB equipped with a satellite, a cable or a terrestrial tuner 311 (one or more instances of the same or mixed types) retrieves data in a unidirectional way in a push mode, i.e. the broadcast data is retrieved when it arrives to the STB's tuners and further hardware components as demodulators 313 or demultiplexers 312, then the data is either processed by further hardware components including descramblers and decoders or processed by software modules as PSI/SI or EPG engines 316, 317.

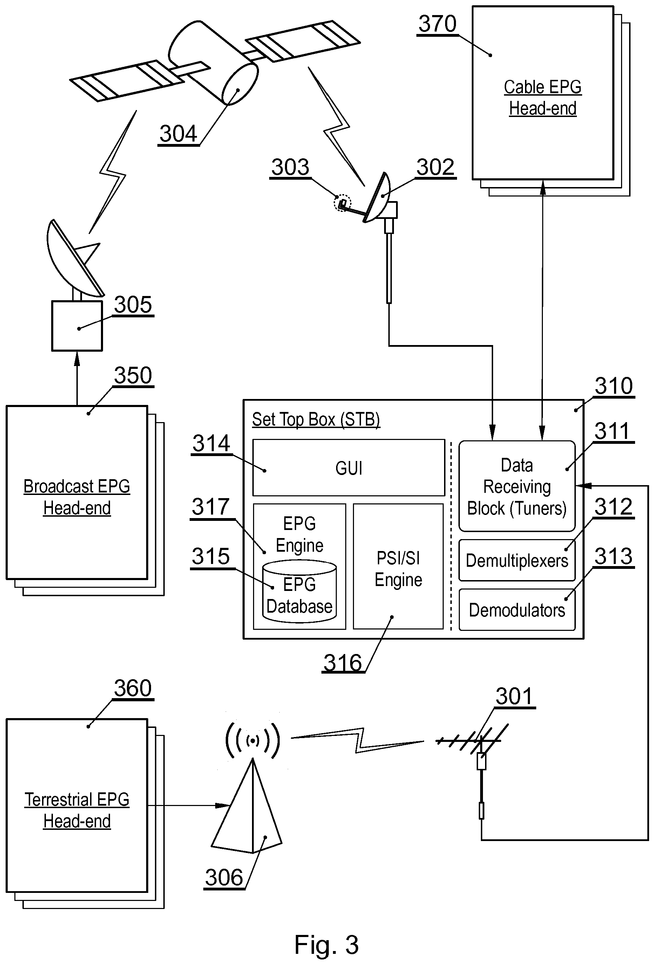

An example of such a system is shown in Fig. 3. Data of different types 370, 350, 360 are broadcast with various bitrates (for example, components' data) and repetition rate (for example, PSI/SI tables' sections). A certain set of data can be strictly synchronized to each other - for example a service's components - while other broadcast information is not strictly synchronized; an example includes EIT sections that in case of schedule information can be updated once a day and in case of present/following events can be updated closely (in time) to the actual content of the corresponding service.

Both schedule and present/following events refer to the service's content more or less precisely, that is when an event has become the present event of a given service, the content of that service's components should refer to the present event, but it usually happens that the current content refers to a closing part of the previous event, to an advertisement block (if any) between the previous and present events, or just the present event's content that has already started.

Furthermore, it may happen that the EIT information with a parental rating value has not been collected yet (if any), because of the STB's cold start, or such an event is simply not available in the TS the STB is currently tuned to, or the event (EIT) has not been retrieved from the TS and processed by software modules yet while the service's components presentation has already started.

This may lead to a situation where content rated for an adult audience is being presented incorrectly. Some STBs may block presentation of the service's content until the associated EIT event is retrieved (which may require some time: seconds to several minutes). Both these situations are undesired and hence it is reasonable to address a possible solution.

Due to such rare availability, in input data streams, of SI information, and in particular EIT information, incorrect presentation or blocking of content may occur, which is a disadvantage rooted in the formulation of SI data organization defined many years ago.

One of the solutions available is a use of an additional data link, such as an Ethernet link, in order to quickly and on demand download data normally carried by the EIT tables. Nevertheless, such solution is expensive as it requires an additional data link together with its associated hardware and software on the client side. Further, it also requires additional service on the server's side.

It would be advantageous to present a more cost effective solution providing an improved parental control ratings delivery to a content receiver, especially a broadcast only receiver.

### SUMMARY AND OBJECTS OF THE PRESENT INVENTION

An object of the present invention is a method for improved parental control ratings delivery to a content receiver, said content received being configured to retrieve data according to Program-specific information (PSI) and Service Information (SI) according to Digital Video Broadcasting (DVB), the method comprising the steps of: retrieving Program-specific information for given content; determining whether Parental Rating data is present in said Program-specific information (PSI); applying the parental rating, retrieved from the Program-specific information (PSI), to the outputting of said content; retrieving Service Information (SI) for the given content; determining a presence of Parental Rating data in the retrieved Service Information (SI); applying the parental rating, retrieved from the Service Information (SI) data, to the outputting of said content.

Preferably, the Parental Rating data present in said Program-specific information comprises said rating at the level of each service signalled.

Preferably, the Parental Rating data present in said Program-specific information comprises said rating at the level of each component of a service signalled.

Preferably, the Parental Rating data present in said Program-specific information are associated with a Program Map Table.

Preferably, the method further comprises a step of monitoring said Service Information for updates.

Preferably, the Parental Rating data present in said Program-specific information comprises said rating at the level of each service signalled while the corresponding Parental Rating data present in said Program-specific information comprises said rating at the level of each component of each component of said each service.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

A further object of the present invention is a Digital Video Broadcasting (DVB) Program-specific information (PSI) / Service Information (SI) compliant signal characterized in that it comprises: modified Program-specific information (PSI) comprising additional descriptors defining parental rating of each service; and modified Service Information (SI) comprising additional descriptors defining parental rating of each component of said each service.

Another object of the present invention is a receiver for improved parental control ratings delivery and processing, wherein said receiver comprises a PSI/SI engine configured to receive and process Digital Video Broadcasting (DVB) comprising Program-specific information (PSI) and Service Information (SI); the receiver being characterized in that it comprises: reception means configured to receive a signal according to the present invention; a controller configured to execute all steps of the method according to the method of the present invention.

A further object of the present invention transmitter for improved parental control ratings delivery to a content receiver, said transmitter comprising: a data bus communicatively coupled to a memory as well as other components of the system so that they may be managed by a controller; a Program-specific information (PSI) data generator configured to generate modified Program-specific information (PSI) comprising additional descriptors defining parental rating of each generated service; a Service Information (SI) data generator configured to generate modified Service Information (SI) data comprising additional descriptors defining parental rating of each component of said each generated service; a DVB encapsulation engine configured to encapsulate, according to DVB standard(s), said modified Program-specific information (PSI) and modified Service Information (SI); a broadcast channel for transmitting an output signal comprising said content as well as said encapsulated modified Program-specific information (PSI) and modified Service Information (SI).

### BRIEF DESCRIPTION OF THE DRAWINGS

These and other objects of the invention presented herein, are accomplished by providing a system and method for improved parental control ratings delivery to a content receiver. Further details and features of the present invention, its nature and various advantages will become more apparent from the following detailed description of the preferred embodiments shown in a drawing, in which:
Fig. 1 presents a diagram of an example of a Transport Stream;
Fig. 2 presents an example of an EPG GUI;
Fig. 3 shows a high-level overview of broadcast-based TV systems;
Fig. 4 presents a modified PMT comprising a service parental rating descriptor;
Figs. 5A-B show a modified PMT and EIT sections comprising a component parental rating descriptor;
Fig. 6 depicts a method that uses parental rating information signalled in a service's PMT;
Fig. 7 presents a method for managing a change of a service's present event;
Fig. 8 is a method for handling changes of a service's PMT;
Fig. 9 presents a diagram of the system according to the present invention, from a perspective of a broadcast headend; and
Fig. 10 shows a high level of the present invention, executed in an audio/video content receiver.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention solves the problem of improving parental control ratings delivery to a content receiver by introducing additional information to PMTs and optionally to other SI tables.

A PMT's repetition rate is typically 100 ms (in terrestrial networks up to 500 ms), while EPG information in standard EIT sections is transmitted with repetition rate varying from 2 seconds to 300 seconds, depending on the information (present/following/schedule), services (on actual/other transports) and delivery system (satellite/cable and terrestrial). Because the PMT for a given service must be received and processed when that service is being selected and since the PMT comprises information about components associated with the service, by inserting parental rating information within a PMT it is guaranteed that such information is available prior presenting any component of that service.

Preferably, the parental rating information added to the PMT is in line with the event being currently presented. This entails also that a PMT changes when the next event's parental rating value is different than for the current event. The STB's PSI/SI engine monitors PMT sections of the service being presented for their versions changes and acts accordingly to changed/added/removed information (like components, descriptors, private information).

The parental rating information added to a PMT's program_info loop, so that it preferably refers to the entire service, not individual components, and it is the parental rating descriptor defined by the ETSI EN 300 468 specification with a proprietary tag value (between 0x80 and 0xFE) preceded by a private data specifier descriptor. Note that the private parental rating descriptor does not have to exist in the PMT - in such a case the event is not parentally rated (the same behaviour is applied as for the case when there is lack of a parental rating descriptor in an EIT event).

In parallel, the EPG engine monitors EIT sections. Parental rating information found in EITs is of higher priority than the one signalled in a PMT. Hence, if the present event of the service being presented has been collected to the EPG database, it is used to check if the user is authorized to watch or listen to the service's content. Otherwise, the PMT parental rating information is applied, however as only the corresponding EIT with the present event is caught, its parental rating information is used. In a typical situation the PMT's and the present event's parental information should be the same, so no action would be taken when the other section type is collected.

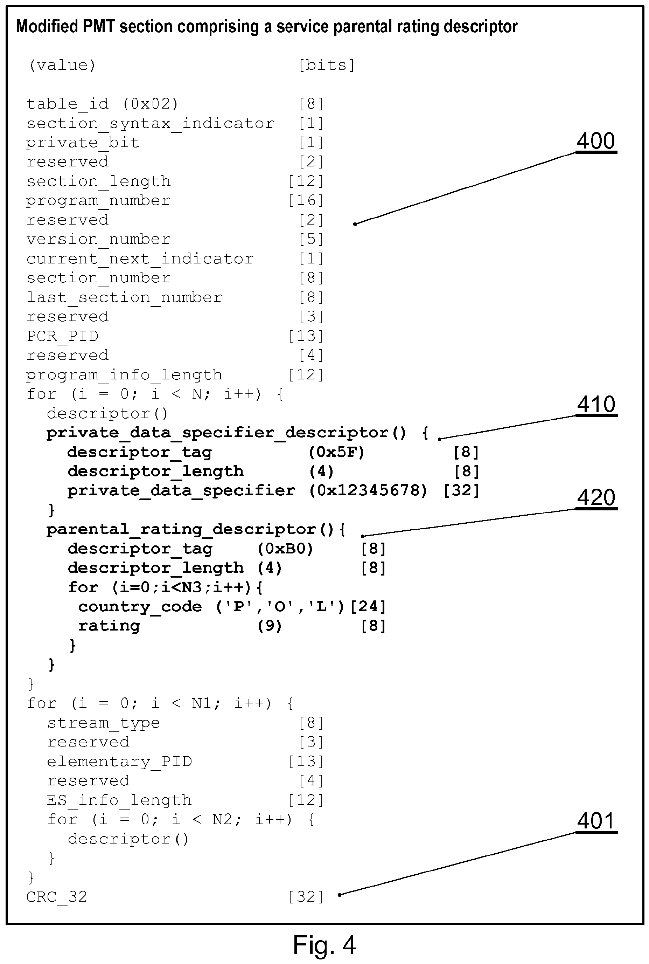

An example of a PMT table, according to the present invention, is shown in Fig. 4, which presents a modified PMT comprising a service parental rating descriptor. In this embodiment, PSI data (the PMT, although application of the same principle in other PSI table may be applied) is modified in order to comprise a service parental rating descriptor. Since this descriptor is available at the PSI level it will be available much quicker to a receiver. At this level a simple service parental rating descriptor is sufficient, which will later be replaced by a higher-priority EIT data for events present on this particular service.

In the example of the PMT section shown in Fig. 4 there is the standard private data specifier descriptor 410 (specified by ETSI EN 300 468) with a tag value equal to 0x5F. This descriptor 410 identifies private descriptors or private parts within descriptors. Because it is located in the descriptor loop, its specifier applies to all following descriptors until the end of the descriptor loop or until another private data specifier descriptor, if any (DVB Document A005). The assignment of the private_data_specifier field's value is given in ETSI TR 101 162.

An example of a private data specifier descriptor 410 is shown below:
- descriptor_tag - equal to 0x5F, an 8-bit length field;
- descriptor_length - equal to 4 (the size of the remaining field in the descriptor following this field), an 8-bit length field;
- private_data_specifier - equal to one of the values registered as specified in ETSI TR 101 162, for instance 0x12345678 (this value has not been registered at the time of writing); a 32-bit length field.

The next descriptor in the loop is a parental rating descriptor 420. Actually, its structure is the same as the standard parental rating descriptor defined by the ETSI EN 300 468, however with the descriptor_tag value set to a user defined value, i.e. in range of 0x80-0xFE, as the standard parental rating descriptor with the descriptor tag value equal to 0x55 is not allowed in a PMT section. For the sake of this example below, the value of 0xB0 is assigned:
- descriptor_tag - equal to 0xB0, an 8-bit length field
- descriptor_length - equal to the size of the remaining fields in the descriptor following this field, an 8-bit length field; for instance, in case of a single rating the value of this size is set to 4
- country_code - a 3-character ISO 3166 code identifying a country; a 24-bit length field, for instance 'P', 'O', 'L'
- rating - a rating value; an 8-bit length field, for instance 9 meaning the audience should be at least 12 years old.

The remaining parts 400, 401 of the PMT section are the same as defined by the ETSI EN 300 468.

Another embodiment of the present invention adds parental rating extensions per component of a service. For example, there may be a plurality of audio and subtitles components of a service with different parental rating values and contents applicable for an audience of various ages.

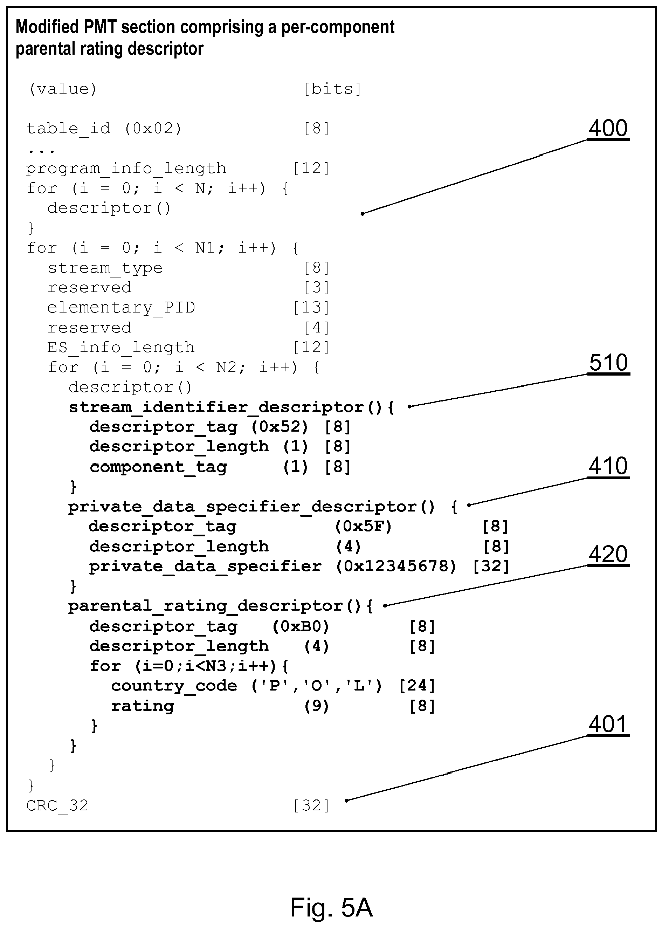

Such parental rating information for a given component may be signalled in a PMT (see Fig. 5A) by means of a parental rating descriptor added to the component's ES_info loop along with the standard stream identifier descriptor, which enables to identify a component in an EIT event.

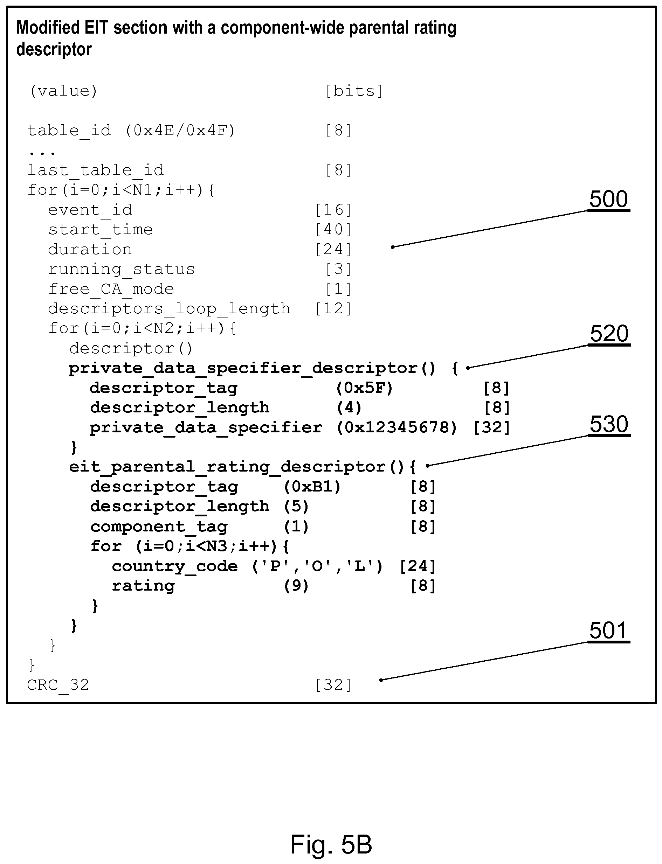

In order to specify parental rating values for individual components in an EIT table (see Fig. 5B), a new descriptor may be introduced. An example includes a descriptor containing the component tag specified by a given stream identifier descriptor in the PMT and a part of the standard parental rating descriptor. Examples of such PMT and EIT sections with parental rating values independent for individual components are shown in Figures 5A-5B. Although the TID (Table Id) refers in the EIT example to the EIT present section of the actual or other transport, the EIT information may be collected - in general - from other EIT sections as following and schedule ones. In such a case by the present event is it understood a service's current event that refers for the current time, i.e. the event has already commenced, but it has not finished yet.

Note that the method for determining the actual parental rating value is the same as for the service-wide approach, just the method is applied for every component signalled in the service's PMT and having its counterpart in the EIT event.

Although this embodiment is presented in a context of parental rating, it may be applied for other data that must be known prior starting a presentation of a service at a receiver.

In the example of the PMT section shown in Fig. 5A there is an additional descriptor in respect to the example presented in Fig. 4: the stream identifier descriptor 510, which enables to link the component with the PMT section with another SI table, in this case EIT. An example of that descriptor is shown below:
- descriptor_tag - equal to 0x52, an 8-bit length field;
- descriptor_length - equal to 1 (the size of the remaining field in the descriptor following this field), an 8-bit length field;
- component_tag - identifies the component specified within a given PMT; for the sake of this example the value of 1 is used, an 8-bit length field.

In the example of the EIT section shown in Fig. 5B there are parental rating descriptors 530 provided in order to signal parental rating values in the descriptor loop. The descriptor is the additional EIT parental rating descriptor that is an extension of the standard parental rating descriptor and links the parental rating value with the component identified by the stream identifier descriptor in the PMT section through the component tag field. An example of said EIT parental rating descriptor 530 (per component) is shown below:
- descriptor_tag - for the sake of this example, the value of 0xB1 is assigned; an 8-bit length field;
- descriptor_length - equal to the size of the remaining fields in the descriptor following this field, an 8-bit length field; for instance, in case of a single rating the value of this size is set to 5;
- component_tag - for the sake of this example, the value of 1 is assigned (the same as in the corresponding component signalled in the PMT);
- country_code and rating fields have the same example values as assumed in Fig. 4.

Descriptor 520 corresponds to item 410 while the remaining parts 400, 401 of the PMT section as well as parts 500, 501 of the EIT section are the same as defined by the ETSI EN 300 468.

As already mentioned above, a service PMT is extended to signal additional information conveying the parental rating value of the content being currently broadcast in context of that service. This entails that the PMT's version preferably changes to reflect the audience's minimum age of content of the service's components.

By this embodiment the STB is capable of blocking, without noticeable delay as in case of prior art systems and without unnecessary restrictions, presentation of content - if its parental rating exceeds the STB's parental control settings. Even if parental rating information is unavailable for the service from EITs, the service's components presentation may still be blocked appropriately. This means, in particular, that the STB will not start presenting automatically the service's content for the adult audience - if the STB's parental rating settings disallow doing so - and possibly continue blocking the presentation once the EIT's parental rating information is retrieved. Of course, the user may always unblock the content by entering the parental control PIN.

On the other hand, the STB could block presentation of the service's components until its present EIT event has been retrieved. However, in such a case it may happen that the current service's content does not refer to any parental rating's restrictions, therefore the presentation would be blocked unnecessarily until the present EIT event with optional parental information is collected.

It is worth noting that the EIT information may be not available for a plurality of reasons; examples include: the EIT sections referring to the current content of the service being presented have not been collected yet or have expired (are in the past), they are not available from one or more transports being currently tuned to, there is a temporary failure of the EPG headend.

The aforementioned solution provides a two-level parental rating information. The first level is in the PSI data (e.g. PMT) while the other level is in the SI data (e.g. EIT). It may also be the case that the PSI level parental rating information comprises fewer options than the parental level information provided at the SI data level. This allows to quickly receive parental rating information from the PSI data and wait for the (typically) more complex parental rating information provided at the level of SI data. For example, the PSI parental rating information may be at a level of a service while the corresponding SI parental rating information may be at the level of components of that particular service. When the corresponding, more detailed SI level parental rating information is available, it is preferably used in place of the previously received PSI level parental rating information i.e. the parental rating information at the SI level, once available, has a priority over the parental rating information at the PSI level.

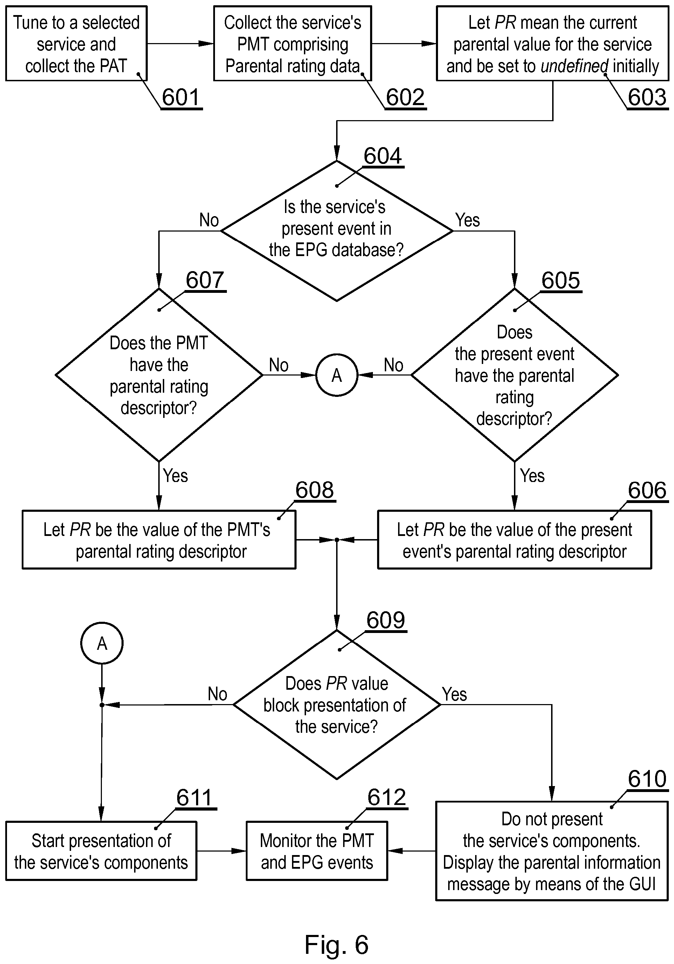

The method presented in Fig. 6 uses the parental rating information signalled in a service's PMT when the service is selected, i.e. it is about to be presented.

The method is triggered by selecting the service 601, usually in response to a user's selection of said service. If the previously selected service was not on the same transport, the transport with the newly selected service is tuned to and the PAT from the transport is retrieved (if the transport has not changed, the PAT has been already retrieved).

Subsequently, in step 602 the PMT is collected from the PID of the service's PMT signalled in the PAT. Next, at step 603, a PR variable is set to an undefined value.

In the subsequent step 604, it is checked if the service's present event has been already collected by the EPG engine 317 to the EPG database 315. If yes, since EPG events' parental rating information are of higher priority than the PMT's parental rating information, in step 605 it is checked if the present event has the parental rating descriptor. If yes, the value of the PR variable is assigned to the value of that descriptor in step 606.

In case the result of the check in step 604 is negative, it is checked at step 607 whether the service's PMT includes a parental rating descriptor 420. If yes, the value of the PR variable is assigned with the value of that descriptor in step 608.

From step 606 or 608 the method advances to step 609, where it is checked if the value of the PR variable blocks the presentation of the service's components - by comparing it with the STB's parental rating settings. If it does, at step 610, the service's components are not presented (displayed, played, rendered, etc) and an appropriate message is displayed for the user by the GUI.

Otherwise, in step 611, presentation of the service's components is started. Then, the method ensures in step 612 that independents actions related to monitoring the service PMT and EIT sections is enabled. Whenever, the result of the check in steps 605 or 607 is negative, the method jumps directly to step 611, as there is not any parental rating information available, therefore the service's component may be presented.

Once the service has been selected, regardless if presentation of its components have been started or blocked, the STB monitors changes of the service's present event. It should be noted that the STB does not need to retrieve the service's EIT sections for the selected service - as the EIT sections may be unavailable for any reasons. Such a present event may be an already collected event, for example from the following or schedule EIT sections, that has become the present event, i.e. its start time is in the past, while its end time is in the future.

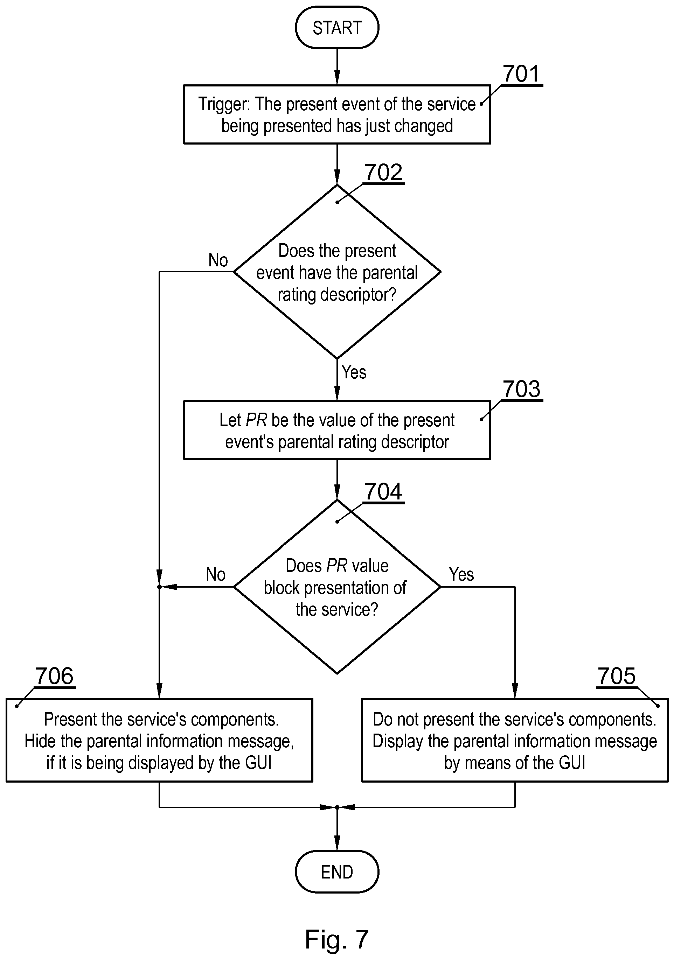

The method shown in Fig. 7 manages a change of the service's present event. The method starts with step 701, which is triggered on the present event's change as described above. Then, at step 702 it is checked whether the new present event comprises parental rating information. If it does, at step 703 the PR variable's value is set to the value of the parental rating descriptor, otherwise the method advances to step 706, where the STB starts (if they have been blocked so far) or continue presentation (if they have already been presenting) of the service's components.

From step 703 the method proceeds to step 704, where it is checked if the value of the PR variable blocks presentation of the service. If yes, the STB stops (if the components have been presented so far) or continues (if the components have already been blocked) blocking the service in step 705, and also display or continue to display the blocking message by means of the GUI. If the result of step 704 is negative, the flow jumps to step 706.

In parallel, the STB must also monitor version changes of the service's PMT. In particular, it may happen that there is not present any parental rating information for the selected service (EIT), while the content's parental rating has changed (for example due to event's change on a given service). This situation may be addressed by the operator adjusting the PMT signalled parental rating and issuing a new version of the PMT for this particular service.

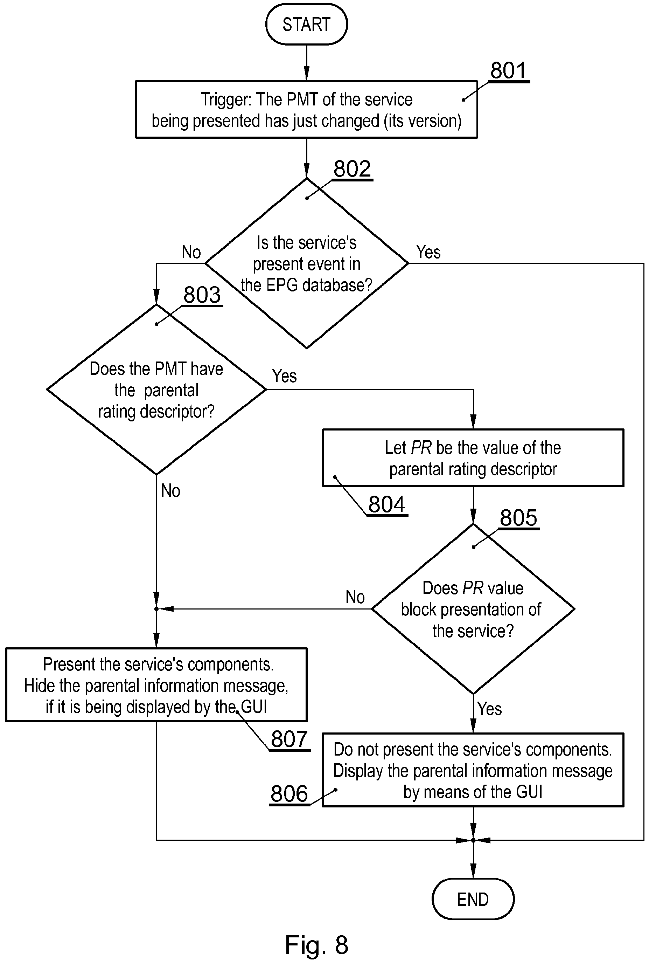

The method shown in Fig. 8 is aimed at handling changes of the service's PMT - it is triggered by such a change at step 801. Then, in step 802 it is checked, if the present event has been already caught to the EPG database 315.

If it has, the method ends, otherwise it advances to step 803, where it is checked whether the PMT comprises the parental rating descriptor 420. If it does not, in step 807 where the STB starts (if they have been blocked so far) or continues content presentation (if they have already been presenting) i.e. output of the service's components.

Otherwise, the method proceeds to step 804, where the PR variable's value is set to the value of the parental rating descriptor 420. Next, in step 805, it is verified whether the value of the PR variable blocks presentation of the service. If it does, the STB stops (if the components have been presented so far) or continues (if the components have already been blocked) blocking the service in step 806, and also displays or continues to display a blocking message by means of the GUI. Otherwise, the method advances to step 807.

As a result, all three aforementioned methods ensure that the STB follows parental rating information, including lack of it, to block or unblock presentation of the respective service immediately even if the EIT of the present event is not available for any reason. Whenever the present event or the PMT changes, the decision if presentation of the service must be blocked or unblocked is taken again.

In broadcast delivery systems, various data is available in a push mode in a unidirectional way. Some information is not strictly synchronized to each other. This leads to cases, in which a given content is being presented to a user (even for a short period of time), while it must not, as it may include content for an audience requiring authorization by entering a PIN.

An example includes, but it is not limited to, parental control information and the parental control mechanism implemented by STBs. Because the EIT information may be unknown, prior starting presentation of a service, a standard STB usually either starts presentation of that service's content or block it until the parental rating information is retrieved. Both these approaches have drawbacks and should be perceived as unacceptable.

The methods provided by the present invention eliminate the aforementioned drawbacks by introducing additional parental rating information to the service's PMT. Because the PMT must be received and processed by the STB prior starting presentation of the associated service's components, there is a guarantee that non authorized content shall not be presented.

Additionally, by monitoring changes of PMT versions, the STB still may apply the parental rating value of the service's content whenever that value has changed, for example another event (or program) has commenced. Furthermore, by treating parental rating information found in EIT events as of the higher priority, the STB follows the standards and expected behaviour as closely as possible.

The present invention is easily extensible for parental rating control or other restrictions signalled also for individual service's components. In such a case the presented methods are applied for these components.

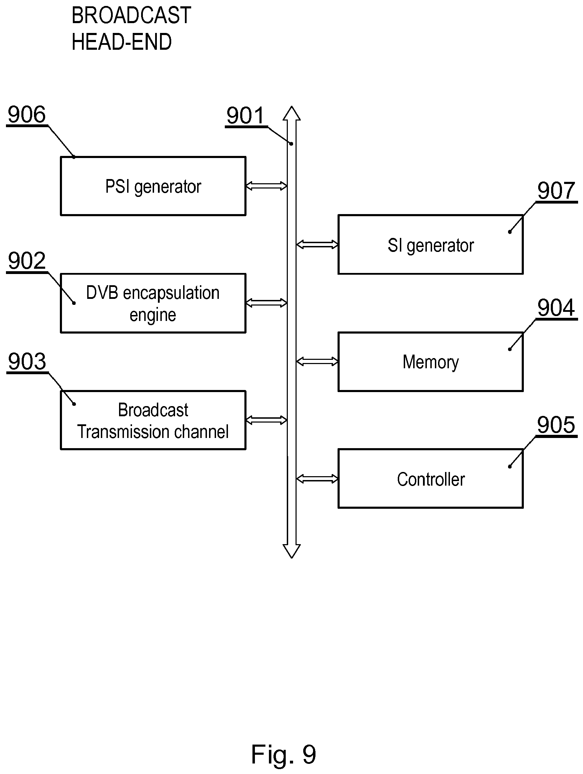

Fig. 9 presents a diagram of the system according to the present invention, from a perspective of a broadcast headend 350, 360, 370. The system is configured to generate modified PSI and Si tables and inject the data in to output data streams after encapsulation according to known DVB standards.

The system may be realized using dedicated components or custom made FPGA or ASIC circuits. The system comprises a data bus 901 communicatively coupled to a memory 904. Additionally, other components of the system are communicatively coupled to the system bus 901 so that they may be managed by a controller 905.

The memory 904 may store computer program or programs executed by the controller 905 in order to execute steps of the method according to the present invention.

A PSI data generator 906 is a typical DVB PSI generator enhanced to generate modified PSI tables as explained with reference to Fig. 4 and 5A. In particular, the additional descriptors 410, 420 may be present in PMT tables of each generated service.

An SI data generator 907 is a typical DVB SI generator enhanced to generate modified SI tables 520, 530 as explained with reference to Fig. 5B. In particular, the additional descriptors 520, 530 may be present in EIT tables of each generated service.

The PSI/SI data are encapsulated according to DVB standard(s) by a DVB encapsulation engine 902 and later transmitted by a broadcast channel 903 (typically as part of an MPEG TS 100A - 100N).

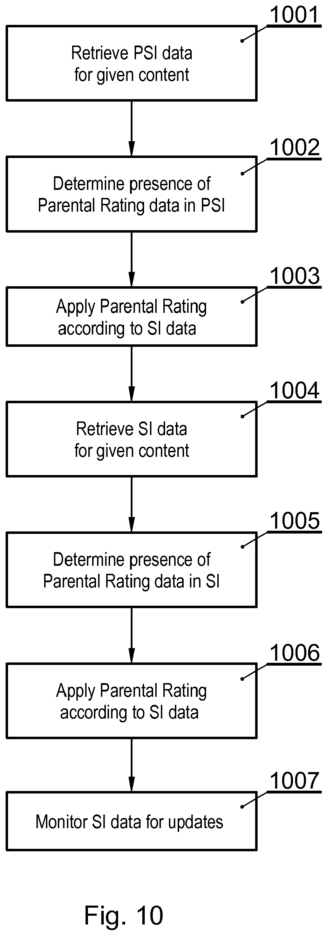

Fig. 10 presents a high-level diagram of the method according to the present invention. The method starts at step 1001 from retrieving PSI data for given content (this general step corresponds to 601, 602, 603, 604 (No) of Fig. 6). subsequently it is determined 1002 whether Parental Rating data is present in said PSI data 607. Next, at step 1003, the parental rating retrieved from the PSI data is applied (be it at the level of the service or component as previously described). Said applying means appropriately configuring a parental control means of the receiver to block or allow outputting of said content.

Further, at step 1004, the method proceeds to retrieving SI data for given content and determining 1005 a presence of Parental Rating data in the SI data. Next, at step 1006, the parental rating retrieved from the SI data is applied (be it at the level of the service or component as previously described). The last, optional step 1007 is monitoring SI data for updates, which may influence Parental Rating data applied at step 1006.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for improved parental control ratings delivery to a content receiver may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for improved parental control ratings delivery to a content receiver, said content received being configured to retrieve data according to Program-specific information (PSI) and Service Information (SI) according to Digital Video Broadcasting (DVB), the method comprising the steps of:
• retrieving (1001) Program-specific information for given content;
• determining (1002) whether Parental Rating data is present in said Program-specific information (PSI);
• applying (1003) the parental rating, retrieved from the Program-specific information (PSI), to the outputting of said content;
• retrieving (1004) Service Information (SI) for the given content;
• determining (1005) a presence of Parental Rating data in the retrieved Service Information (SI);
• applying (1006) the parental rating, retrieved from the Service Information (SI), to the outputting of said content.

2. The method according to claim 1 wherein the Parental Rating data present in said Program-specific information comprises said rating at the level of each service signalled.

3. The method according to claim 1 wherein the Parental Rating data present in said Program-specific information comprises said rating at the level of each component of a service signalled.

4. The method according to claim 1 wherein the Parental Rating data present in said Program-specific information are associated with a Program Map Table.

5. The method according to claim 1 wherein the method further comprises a step of monitoring (1007) said Service Information for updates.

6. The method according to claim 1 wherein Parental Rating data present in said Program-specific information comprises said rating at the level of each service signalled while the corresponding Parental Rating data present in said Program-specific information comprises said rating at the level of each component of each component of said each service.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A Digital Video Broadcasting (DVB) Program-specific information (PSI) / Service Information (SI) compliant signal **characterized in that** it comprises:
• modified Program-specific information (PSI) comprising additional descriptors (410, 420) defining parental rating of each service; and
• modified Service Information (SI) comprising additional descriptors (520, 530) defining parental rating of each component of said each service.

10. A receiver for improved parental control ratings delivery and processing, wherein said receiver comprises
• a PSI/SI engine (316) configured to receive and process Digital Video Broadcasting (DVB) comprising Program-specific information (PSI) and Service Information (SI);
the receiver being **characterized in that** it comprises
• reception means configured to receive a signal according to claim 9;
• a controller configured to execute all steps of the method according to claim 1.

11. A transmitter for improved parental control ratings delivery to a content receiver, said transmitter comprising:
• a data bus (901) communicatively coupled to a memory (904) as well as other components of the system so that they may be managed by a controller (905);
• a Program-specific information (PSI) data generator (906) configured to generate modified Program-specific information (PSI) comprising additional descriptors (410, 420) defining parental rating of each generated service;
• a Service Information (SI) data generator (907) configured to generate modified Service Information (SI) data (520, 530) comprising additional descriptors (520, 530) defining parental rating of each component of said each generated service;
• a DVB encapsulation engine (902) configured to encapsulate, according to DVB standard(s), said modified Program-specific information (PSI) and modified Service Information (SI);
• a broadcast channel (903) for transmitting an output signal comprising said content as well as said encapsulated modified Program-specific information (PSI) and modified Service Information (SI).
